Europäisches Patentamt

European Patent Office

Office européen des brevets

(19)

(11) Publication number : **0 529 884 A1**

(12) **EUROPEAN PATENT APPLICATION**

(21) Application number : **92307403.3**

(22) Date of filing : **13.08.92**

(51) Int. Cl.$^5$ : **H01B 3/44, G02B 6/44, C08K 5/14, C08L 31/04**

(30) Priority : **19.08.91 GB 9117853**

(43) Date of publication of application :
**03.03.93 Bulletin 93/09**

(84) Designated Contracting States :
**AT BE CH DE DK ES FR GB GR IE IT LI LU MC NL PT SE**

(71) Applicant : **BICC Public Limited Company Devonshire House Mayfair Place London W1X 5FH (GB)**

(72) Inventor : **Fordham, Ian Laurence**
**3 New Cottages, Shocklatch**
**Malpas, Cheshire SY14 7BS (GB)**
Inventor : **Braddock, James Edward**
**22 Queensway**
**Wigan, Lancashire WN1 2JA (GB)**
Inventor : **Corrigan, Ruth Elizabeth**
**89 Brampton Road**
**Bexleyheath, Kent (GB)**
Inventor : **Hewlett, Robert Edwin**
**44 Oak Grove**
**Urmston, Manchester M31 1XU (GB)**

(74) Representative : **Poole, Michael John et al**
**BICC plc Patents and Licensing Department**
**Quantum House Maylands Avenue**
**Hemel Hempstead, Herts. HP2 4SJ (GB)**

(54) **Electric cables and compositions for making them.**

(57) A cable has at least one electrical or optical core which is enclosed in a sheath made of a composition. The composition (before curing) comprises (in parts by weight, where applicable) :

a polymer base consisting substantially of an ethylene/vinyl acetate copolymer having a vinyl acetate content in the range 50-75% and a Mooney Viscosity (ML1+4) in the range 20 to 35 ;

per hundred parts of the polymer base, 120-175 parts of an alumina trihydrate filler with a BET surface area in the range 4 to 12m$^2$/g and optionally up to 50 parts of a reinforcing filler subject to a maximum total filler content of 200 parts ;

per hundred parts of total filler, 0.4 to 2 parts of a silane coupling agent ;

conventional amount of antioxidant, hydrolytic degradation inhibitor and release agent and optionally of pigment, plasticiser and/or dessicant ;

and a chemical curative system in an amount chosen in conjunction with time/temperature conditions to achieve a hot elongation in the range from 26 to 120% in hot-set test following the procedure of BS6469 :1990 at 200°C using a load of 0.8 MPa.

EP 0 529 884 A1

This invention relates to electric cables for use in conditions in which performance under fire conditions is of critical importance, for example flexible cables for use on board trains or other vehicles that operate to a substantial extent in tunnels where requirements for safe evacuation of passengers and crew demand that they should give rise to the least possible amounts of obscuring smoke and corrosive or otherwise hazardous fumes. At the same time, such cables must meet other performance requirements, such as flexibility and resistance to fluids that may be spilled on them (including fresh and salt water, fuel and lubricating oils and hydraulic working fluids) that would in other circumstances indicate the use of sheaths based on polychloroprene or other halogen-containing materials; they must, of course, also be suitable for processing on available cable-making machinery.

Halogen-free sheathing materials based on various blends of polymers heavily filled with alumina trihydrate (or certain other fillers that evolve water under fire conditions, though alumina trihydrate - ATH for short - is by far the most usual) are used to sheath various kinds of cable in which fire performance is important, but it is difficult to meet all the requirements of a particular application. In this context, quite small differences in physical properties can have a major effect on fire performance; for example, numerically slight deficiencies in tear strength or elongation can result in failure of fire tests because the sheathing layer fails by splitting along the length of the cable, exposing underlying layers that will normally be both more susceptible to fire and more critical to short-term performance.

The invention also relates to a composition for use in making such cables.

The cable in accordance with the invention comprises at least one electrical or optical core enclosed in a sheath (including any layer forming the surface of the cable) made of a composition having at ambient temperatures a tensile strength of at least 7MPa, elongation at break of at least 150%, a tear strength of at least 4kN/m and a linear swell not greater than 15% after immersion in ASTM No.2 oil for 168 hours at 100°C (all measured on moulded samples of the composition) and at 120°C a Mooney Viscosity (ML1+5) less than 50 and is characterised by the said composition (before curing) comprising (in parts by weight, where applicable):

a polymer base consisting substantially of an ethylene/vinyl acetate copolymer having a vinyl acetate content in the range 50-75% and a Mooney Viscosity (ML1+4) in the range 20 to 35;

per hundred parts of the polymer base, 120 -175 parts of an alumina trihydrate filler with a BET surface area in the range 4 to 12 $m^2/g$ and optionally up to 50 parts of a reinforcing filler subject to a maximum total filler content of 200 parts;

per hundred parts of total filler, 0.4 to 2 parts of a silane coupling agent;

conventional amounts of at least one antioxidant, of at least one stabiliser effective to inhibit hydrolytic degradation, of at least one release agent and optionally of one or more than one pigment, one or more than one plasticiser and/or one or more than one dessicant;

and a chemical curative system in an amount chosen in conjunction with time/temperature conditions to achieve a hot elongation in the range from 26 to 120% in a hot-set test following the procedure of BS6469:1990 at 200°C using a load of 0.8 MPa (instead of the usual loading of 0.2 or 0.4 MPa).

Preferably the ethylene/vinyl acetate copolymer has a vinyl acetate content in the range 55-65%, more especially about 60%; preferably also its Mooney Viscosity (ML1+4) is in the range 25 to 30. more especially about 27. A suitable grade is available from Bayer AG under the designation Levapren KA 8385 or Levapren 600.

Preferably the alumina trihydrate has a BET surface area of about 11$m^2/g$; high-purity grades (that is grades with very low water solubles content) are very desirable, as otherwise performance in contact with aqueous media may be significantly degraded. A suitable grade is available from BA Chemicals Ltd under the designation Baco SF11E. Two grades of alumina trihydrate of different specific surface area may be mixed if desired.

A preferred reinforcing filler is that sold by Cyprus Industrial Minerals Ltd as Cyprubond, which is believed to be a talc with a modified surface. Optimum content of this particular reinforcing filler is about 25 parts per hundred parts of the polymer base.

Many suitable silane coupling agents are available on the market: we have found gamma-glycidoxypropyl trimethoxysilane (sold by Dow Corning Ltd under the designation Silane Z6040) satisfactory, but prefer to use it in the available form of a 70% dispersion on an inert solid carrier (sold as Censperse DM08), in order to mimimise attack on the metal of the blending equipment.

We prefer to use a curative system comprising two different peroxides, for the usual reasons that it gives extended options for adjustment and good physical properties at an early stage of the curing process. The combination of bis (*tert*butylperoxy *iso*propyl) benzene (sold under the designation Retilox F40, Peroximon F40 and Perkadox 14/40) and 1,1,di*tert*butylperoxy-3,3,5-trimethylcyclohexane (sold by Akzo UK Ltd under the designation Trigonox X29/40) is considered particularly suitable for the compositions of this invention. We prefer also that the curative system includes a suitable co-agent such as triallyl cyanurarate (TAC) or triallyl *iso*-

cyanurate.

The following extended table reports, by way of example, a series of trials on which the invention is based; numbered examples 1 - 59 are examples of the invention and lettered examples A - AT are comparison examples outside the scope of the invention.

Batches of 1.5 to 3kg were made up using a lab-scale internal mixer. The ingredients listed in the table have already been described. The polymer and all the additives the filler and the curatives (the two peroxides and the triallylcyanurate) were added to the mixer at room temperature (typically 23°C). Two thirds of the alumina trihydrate filler was added after mixing for one minute and the other third after another minute. Mixing continued until the temperature reached 90°C. At this point the curatives were added and mixing continued until the temperature reached 105°C, when the mix was dumped onto a watercooled mill. Sheets 1.5mm thick were press-cured at 180°C for 15 minutes.

Tests specified were made on samples cut from these sheet. Figures in *italics* in the table are outside the range defining the invention.

Silanes are identified in the Table as follows:

P = A172MB, a master batch of A172 which is vinyl-*tris* (2-methoxyethoxy) silane, 50% active, on a wax carrier; sold by Union Carbide (UK) Ltd.

Q = Z6040, gamma-glycidoxypropyl trimethoxysilane sold by Dow Corning Ltd.

R = A1100, a master batch of gamma-aminoproply triethoxy silane, 60% active on a polymeric carrier; sold by Union Carbide (UK) Ltd.

S = Z6040MB, a master batch of gamma-glycidoxypropyl trimethoxy silane, 70% active, on a mineral carrier; supplied by Central Chemical Co Ltd as Censperse DM08.

## TABLE    Part 1

| EXAMPLE | A | 1 | B | C | D |
|---|---|---|---|---|---|
| LEVAPREN TYPE (100 phr) | 700 | 700 | 700 | 700 | 700 |
| ATH (1) SURFACE AREA | 7 | 7 | 7 | 7 | 7 |
| ATH (1) AMOUNT (phr) | 148.6 | 148.6 | 148.6 | 148.6 | 148.6 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | P | P | P | P | P |
| SILANE AMOUNT (phr) | 4 | 4 | 4 | 4 | 4 |
| NET SILANE ON FILLER (pph) | 1.152 | 1.152 | 1.152 | 1.152 | 1.152 |
| RETILOX F40 | 6 | 3.6 | 2.4 | 3.6 | 1.8 |
| TRIGONOX X29/40 | 0 | 1.8 | 1.2 | 1.8 | 0.9 |
| TAC | 0 | 0.6 | 0.6 | 0 | 0.6 |
| HOT ELONGATION (%) | *<26* | | *<26* | *<26* | *<26* |
| TENSILE STRENGTH (MPa) | 10.24 | 10.16 | 9 | 9.3 | 8.48 |
| ELONGATION AT BREAK (%) | 187.3 | 217.6 | 266 | 240 | 239 |
| TEAR STRENGTH (kN/m) | *3.66* | 4.42 | *3.95* | *3.88* | *3.68* |
| LINEAR SWELL (%) | | | | | |
| MOONEY VISCOSITY* | | | | | |

* all Mooney Viscosities are quoted in Mooney Units and are measured according to ML(1+5) conditions at 120°C

TABLE Part 2

| EXAMPLE | 2 | E | 3 | F | 4 |
|---|---|---|---|---|---|
| LEVAPREN TYPE (100 phr) | 700 | 700 | 700 | 700 | 700 |
| ATH (1) SURFACE AREA | 7 | 7 | 7 | 7 | 7 |
| ATH (1) AMOUNT (phr) | 148.6 | 148.6 | 148.6 | 148.6 | 156.4 |
| ATH (2) SURFACE AREA | | | | | |
| ATH (2) AMOUNT (phr) | | | | | |
| CYPRUBOND AMOUNT (phr) | 25 | 25 | 25 | 25 | 26.3 |
| SILANE TYPE | P | P | P | P | P |
| SILANE AMOUNT (phr) | 4 | 4 | 4 | 4 | 4.2 |
| NET SILANE ON FILLER (pph) | 1.152 | 1.152 | 1.152 | 1.152 | 1.149 |
| RETILOX F40 | 2.4 | 1.8 | 2.1 | 0.9 | 2.4 |
| TRIGONOX X29/40 | 1.2 | 0.9 | 1.0 | 0.6 | 1.2 |
| TAC | 0.3 | 0.3 | 0.3 | 0.3 | 0.3 |
| HOT ELONGATION (%) | | <26 | | >120 | |
| TENSILE STRENGTH (MPa) | 8.93 | 8.75 | 9.12 | 6.19 | 9.41 |
| ELONGATION AT BREAK (%) | 236 | 228 | 248 | 308 | 205.5 |
| TEAR STRENGTH (kN/m) | 4.58 | 3.75 | 4.01 | 4.72 | 4.1 |
| LINEAR SWELL (%) | | | | | |
| MOONEY VISCOSITY | | | | 20 | |

TABLE Part 3

| EXAMPLE | 5 | G | H | 6 |
|---|---|---|---|---|
| LEVAPREN TYPE (100 phr) | 700 | 700 | 700 | 700 |
| ATH (1) SURFACE AREA | 7 | 7 | 7 | 7 |
| ATH (1) AMOUNT (phr) | 165 | 165 | 99 | 99 |
| ATH (2) SURFACE AREA | | | 35 | 35 |
| ATH (2) AMOUNT (phr) | | | 49.5 | 49.5 |
| CYPRUBOND AMOUNT (phr) | 27.7 | 27.7 | 25 | 25 |
| SILANE TYPE | P | P | P | P |
| SILANE AMOUNT (phr) | 4.4 | 4.4 | 4 | 4 |
| NET SILANE ON FILLER (pph) | 1.142 | 1.142 | 1.153 | 1.153 |
| RETILOX F40 | 2.4 | 1.8 | 0.9 | 1.2 |
| TRIGONOX X29/40 | 1.2 | 0.9 | 0.6 | 0.6 |
| TAC | 0.3 | 0.3 | 0.3 | 0.3 |
| HOT ELONGATION (%) | | >120 | >120 | |
| TENSILE STRENGTH (MPa) | 8 | 6.26 | 6.27 | 7.71 |
| ELONGATION AT BREAK (%) | 221.5 | 221.7 | 253.9 | 294.9 |
| TEAR STRENGTH (kN/m) | 4.65 | 5.36 | 5.56 | 4.07 |
| LINEAR SWELL (%) | | | | |
| MOONEY VISCOSITY | | | 26 | |

TABLE Part 4

| EXAMPLE | J | K | L |
|---|---|---|---|
| LEVAPREN TYPE (100 phr) | 700 | 700 | 700 |
| ATH (1) SURFACE AREA | 7 | 7 | 4 |
| ATH (1) AMOUNT (phr) | 74.3 | 49.5 | 147 |
| ATH (2) SURFACE AREA | 35 | 35 | |
| ATH (2) AMOUNT (phr | 74.3 | 99 | |
| CYPRUBOND AMOUNT (phr) | 25 | 25 | 25 |
| SILANE TYPE | P | P | P |
| SILANE AMOUNT (phr) | 4 | 4 | 4 |
| NET SILANE ON FILLER (pph) | 1.152 | 1.153 | 1.163 |
| RETILOX F40 | 0.9 | 0.9 | 2.4 |
| TRIGONOX X29/40 | 0.6 | 0.6 | 1.2 |
| TAC | 0.3 | 0.3 | 0.3 |
| HOT ELONGATION (%) | >120 | >120 | >120 |
| TENSILE STRENGTH (MPa) | 5.94 | 6.07 | 6.5 |
| ELONGATION AT BREAK (%) | 248.3 | 216.3 | 256 |
| TEAR STRENGTH (kN/m) | 6.37 | 4.96 | 5.8 |
| LINEAR SWELL (%) | | | |
| MOONEY VISCOSITY | 31 | 33 | |

TABLE Part 5

| EXAMPLE | N | P | 8 | Q | 9 |
|---|---|---|---|---|---|
| LEVAPREN TYPE (100 phr) | 700 | 700 | 700 | 700 | 700 |
| ATH (1) SURFACE AREA | 11 | 7 | 11 | 11 | 11 |
| ATH (1) AMOUNT (phr) | 147 | 147 | 128 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | Q | R | Q | Q | Q |
| SILANE AMOUNT (phr) | 2 | 2 | 1.44 | 2.16 | 2.88 |
| NET SILANE ON FILLER (pph) | 1.16 | 1.16 | 0.94 | 1.41 | 1.88 |
| RETILOX F40 | 2.4 | 2.4 | 2.4 | 2.4 | 2.4 |
| TRIGONOX X29/40 | 1.2 | 1.2 | 1.2 | 1.2 | 1.2 |
| TAC | 0.3 | 0.3 | 0.3 | 0.3 | 0.3 |
| HOT ELONGATION (%) | >120 | >120 | | <26 | |
| TENSILE STRENGTH (MPa) | 5.72 | 5.56 | 7.35 | 10.58 | 9.53 |
| ELONGATION AT BREAK (%) | 374 | 279 | 303 | 219 | 224 |
| TEAR STRENGTH (kN/m) | 6.23 | 7.13 | 7.06 | 3.36 | 4.03 |
| LINEAR SWELL (%) | | | | | |
| MOONEY VISCOSITY | | | | | |

TABLE Part 6

| EXAMPLE | 10 | 11 | R | 12 |
|---|---|---|---|---|
| LEVAPREN TYPE (100 phr) | 700 | 700 | 700 | 700 |
| ATH (1) SURFACE AREA | 11 | 11 | 11 | 11 |
| ATH (1) AMOUNT (phr) | 147 | 147 | 147 | 155 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | Q | Q | Q | Q |
| SILANE AMOUNT (phr) | 1.44 | 2.16 | 2.88 | 1.44 |
| NET SILANE ON FILLER (pph) | 0.83 | 1.25 | 1.67 | 0.8 |
| RETILOX F40 | 2.4 | 2.4 | 2.4 | 2.4 |
| TRIGONOX X29/40 | 1.2 | 1.2 | 1.2 | 1.2 |
| TAC | 0.3 | 0.3 | 0.3 | 0.3 |
| HOT ELONGATION (%) | | | <26 | |
| TENSILE STRENGTH (MPa) | 9.32 | 8.27 | 10.29 | 8.87 |
| ELONGATION AT BREAK (%) | 200 | 154 | 202 | 204 |
| TEAR STRENGTH (kN/m) | 4.25 | 4.34 | 3.36 | 4.18 |
| LINEAR SWELL (%) | | | | |
| MOONEY VISCOSITY | | | | |

TABLE Part 7

| EXAMPLE | 13 | S | 14 | T | 15 |
|---|---|---|---|---|---|
| LEVAPREN TYPE (100 phr) | 700 | 700 | 700 | 700 | 700 |
| ATH (1) SURFACE AREA | 11 | 11 | 11 | 11 | 11 |
| ATH (1) AMOUNT (phr) | 155 | 155 | 128 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | Q | Q | S | S | Q |
| SILANE AMOUNT (phr) | 2.16 | 2.88 | 2.13 | 2.13 | 2.13 |
| NET SILANE ON FILLER (pph) | 1.2 | 1.6 | 0.975 | 0.975 | 0.975 |
| RETILOX F40 | 2.4 | 2.4 | 2 | 8 | 0.7 |
| TRIGONOX X29/40 | 1.2 | 1.2 | 0 | 0 | 1.0 |
| TAC | 0.3 | 0.3 | 0 | 0 | 0.3 |
| HOT ELONGATION (%) | | <26 | 70 | 20 | |
| TENSILE STRENGTH (MPa) | 10.11 | 9.99 | 10.5 | 14.4 | 7.1 |
| ELONGATION AT BREAK (%) | 201 | 181 | 284 | 131 | 289 |
| TEAR STRENGTH (kN/m) | 4.29 | 3.84 | 4.1 | 2.8 | 6 |
| LINEAR SWELL (%) | | | 8.2 | | 8.0 |
| MOONEY VISCOSITY | | | 35 | | 28 |

6

TABLE Part 8

| EXAMPLE | U | 16 | V | 17 |
|---|---|---|---|---|
| LEVAPREN TYPE (100 phr) | 700 | 700 | 700 | 700 |
| ATH (1) SURFACE AREA | 11 | 11 | 11 | 11 |
| ATH (1) AMOUNT (phr) | 128 | 128 | 128 | 128 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | S | Q | S | Q |
| SILANE AMOUNT (phr) | 2.13 | 1.6 | 2.13 | 1.6 |
| NET SILANE ON FILLER (pph) | 0.975 | 0.732 | 0.975 | 0.732 |
| RETILOX F40 | 4.0 | 4.0 | 6.8 | 1.5 |
| TRIGONOX X29/40 | 4.0 | 4.0 | 0 | 0.5 |
| TAC | 0 | 0 | 1.2 | 0 |
| HOT ELONGATION (%) | *25* | 40 | *15* | 75 |
| TENSILE STRENGTH (MPa) | 13.7 | 10.1 | 16.2 | 7.3 |
| ELONGATION AT BREAK (%) | 149 | 186 | *121* | 297 |
| TEAR STRENGTH (kN/m) | *3* | 4 | *2.8* | 5.7 |
| LINEAR SWELL (%) | | 8.7 | | 8.7 |
| MOONEY VISCOSITY | | 28 | | 30 |

TABLE Part 9

| | BB | 19 | W | X |
|---|---|---|---|---|
| LEVAPREN TYPE (100 phr) | 700 | 700 | 700 | 700 |
| ATH (1) SURFACE AREA | 11 | 11 | 11 | 11 |
| ATH (1) AMOUNT (phr) | 128 | 128 | 128 | 128 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | Q | Q | Q | Q |
| SILANE AMOUNT (phr) | 1.6 | 1.6 | 1.6 | 1.6 |
| NET SILANE ON FILLER (pph) | 0.732 | 0.732 | 0.732 | 0.732 |
| RETILOX F40 | 1.0 | 3.375 | 4.8 | 7.4 |
| TRIGONOX X29/40 | 1.0 | 1.25 | 2.0 | 0 |
| TAC | 0 | 0.375 | 1.2 | 0.6 |
| HOT ELONGATION (%) | *160* | 35 | *<26* | *<26* |
| TENSILE STRENGTH (MPa) | *6.1* | 10.8 | 13.9 | 12.5 |
| ELONGATION AT BREAK (%) | 380 | 218 | *136* | *93* |
| TEAR STRENGTH (kN/m) | 8.4 | 4 | *3.3* | *3.7* |
| LINEAR SWELL (%) | 8.9 | 8.7 | | |
| MOONEY VISCOSITY | 30 | 29 | | |

TABLE  Part 10

| EXAMPLE | Y | | 20 | 21 | 22 |
|---|---|---|---|---|---|
| LEVAPREN TYPE (100 phr) | 700 | | 700 | 700 | 700 |
| ATH (1) SURFACE AREA | 11 | | 11 | 11 | 11 |
| ATH (1) AMOUNT (phr) | 128 | | 128 | 128 | 128 |
| ATH (2) SURFACE AREA | | | | | |
| ATH (2) AMOUNT (phr) | | | | | |
| CYPRUBOND AMOUNT (phr) | 25 | | 25 | 25 | 25 |
| SILANE TYPE | S | | S | Q | Q |
| SILANE AMOUNT (phr) | 2.13 | | 2.13 | 2.13 | 1.6 |
| NET SILANE ON FILLER (pph) | 0.975 | | 0.975 | 0.975 | 0.732 |
| RETILOX F40 | 2.8 | | 1.7 | 4.25 | 3.4 |
| TRIGONOX X29/40 | 4 | | 1 | 0 | 4 |
| TAC | 1.2 | | 0.3 | 0.75 | 0.6 |
| HOT ELONGATION (%) | 20 | | 70 | 26 | 30 |
| TENSILE STRENGTH (MPa) | 14.6 | | 10.3 | 12.2 | 10.9 |
| ELONGATION AT BREAK (%) | 127 | | 276 | 182 | 197 |
| TEAR STRENGTH (kN/m) | 2.8 | | 4.3 | 4 | 4 |
| LINEAR SWELL (%) | | | 8.4 | 9.1 | 8.4 |
| MOONEY VISCOSITY | | | 31 | 28 | 27 |

TABLE Part 11

| EXAMPLE | 23 | 24 | z | 25 | 26 |
|---|---|---|---|---|---|
| LEVAPREN TYPE (100 phr) | 700 | 700 | 700 | 700 | 700 |
| ATH (1) SURFACE AREA | 11 | 11 | 11 | 11 | 11 |
| ATH (1) AMOUNT (phr) | 128 | 128 | 128 | 128 | 150 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | Q | Q | S | S | S |
| SILANE AMOUNT (phr) | 1.6 | 1.6 | 2.13 | 2.13 | 1.595 |
| NET SILANE ON FILLER (pph) | 0.732 | 0.732 | 0.975 | 0.97 | 0.638 |
| RETILOX F40 | 5 | 1.85 | 3.375 | 1.86 | 1.86 |
| TRIGONOX X29/40 | 0 | 0 | 1.25 | 1.86 | 1.86 |
| TAC | 0 | 0.15 | 0.375 | 0.15 | 0.15 |
| HOT ELONGATION (%) | 32.5 | 65 | 25 | | |
| TENSILE STRENGTH (MPa) | 11.1 | 7.5 | 14.1 | 7.36 | 7.14 |
| ELONGATION AT BREAK (%) | 231 | 267 | 185 | 345 | 275 |
| TEAR STRENGTH (kN/m) | 4.2 | 5.7 | 3.7 | 6.3 | 4.63 |
| LINEAR SWELL (%) | 8.9 | 8.9 | 8.7 | | |
| MOONEY VISCOSITY | 26 | 30 | 30 | | 36 |

TABLE Part 12

| EXAMPLE | 27 | 28 | 29 | 30 |
|---|---|---|---|---|
| LEVAPREN TYPE (100phr) | 700 | 700 | 700 | 700 |
| ATH (1) SURFACE AREA | 11 | 11 | 11 | 11 |
| ATH (1) AMOUNT (phr) | 128 | 128 | 150 | 139 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | S | S | S | S |
| SILANE AMOUNT (phr) | 2.13 | 1.06 | 2.13 | 2.13 |
| NET SILANE ON FILLER (pph) | 0.97 | 0.485 | 0.85 | 0.91 |
| RETILOX | 1.86 | 1.86 | 1.86 | 1.86 |
| TRIGONOX | 1.86 | 1.86 | 1.86 | 1.86 |
| TAC | 0.15 | 0.15 | 0.15 | 0.15 |
| HOT ELONGATION | | | | |
| TENSILE STRENGTH | 7.21 | 7.12 | 7.31 | 7.14 |
| ELONGATION AT BREAT (%) | 258 | 373 | 268 | 336 |
| TEAR STRENGTH (kN/m) | 5.46 | 6.26 | 5.28 | 4.55 |
| LINEAR SWELL (%) | | | | |
| MOONEY VISCOSITY | | | | |

TABLE Part 13

| EXAMPLE | 31 | AA | AB | 32 | 33 |
|---|---|---|---|---|---|
| LEVAPREN TYPE (100 phr) | 700 | 700 | 700 | 700 | 700 |
| ATH (1) SURFACE AREA | 11 | 11 | 11 | 11 | 11 |
| ATH (1) AMOUNT (phr) | 128 | 139 | 128 | 150 | 150 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | S | S | S | S | S |
| SILANE AMOUNT (phr) | 1.595 | 1.595 | 1.06 | 1.06 | 2.13 |
| NET SILANE ON FILLER (pph) | 0.730 | 0.680 | 0.485 | 0.424 | 0.852 |
| RETILOX F40 | 1.86 | 1.86 | 1.86 | 1.86 | 1.86 |
| TRIGONOX X29/40 | 1.86 | 1.86 | 1.86 | 1.86 | 1.86 |
| TAC | 0.15 | 0.15 | 0.15 | 0.15 | 0.15 |
| HOT ELONGATION (%) | | >120 | >120 | | |
| TENSILE STRENGTH (MPa) | 7.65 | 6.65 | 6.65 | 7.43 | 7.37 |
| ELONGATION AT BREAK (%) | 370 | 315 | 316 | 318 | 293 |
| TEAR STRENGTH (kN/m) | 7.34 | 4.45 | 4.77 | 5.14 | 4.46 |
| LINEAR SWELL (%) | | | | | |
| MOONEY VISCOSITY | | | | | |

TABLE Part 14

| EXAMPLE | 34 | 35 | AC | 36 | 37 |
|---|---|---|---|---|---|
| LEVAPREN TYPE (100 phr) | 700 | 700 | 700 | 700 | 700 |
| ATH (1) SURFACE AREA | 11 | 11 | 11 | 11 | 11 |
| ATH (1) AMOUNT (phr) | 139 | 139 | 150 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | S | S | S | S | S |
| SILANE AMOUNT (phr) | 2.13 | 1.06 | 1.595 | 1.595 | 1.74 |
| NET SILANE ON FILLER (pph) | 0.910 | 0.452 | 0.638 | 0.730 | 0.796 |
| RETILOX F40 | 1.86 | 1.86 | 1.86 | 1.86 | 1.86 |
| TRIGONOX X29/40 | 1.86 | 1.86 | 1.86 | 1.86 | 1.86 |
| TAC | 0.15 | 0.15 | 0.15 | 0.15 | 0.15 |
| HOT ELONGATION (%) | | | >120 | | |
| TENSILE STRENGTH (MPa) | 7.36 | 7.05 | 6.17 | 8.28 | 9.5 |
| ELONGATION AT BREAK (%) | 209 | 291 | 190 | 236 | 275 |
| TEAR STRENGTH (kN/m) | 4.87 | 4.53 | 5.38 | 6.16 | 4.57 |
| LINEAR SWELL (%) | | | | | |
| MOONEY VISCOSITY | | | | | |

TABLE Part 15

| EXAMPLE | 38 | 39 | 40 | 41 |
|---|---|---|---|---|
| LEVAPREN TYPE (100 phr) | 700 | 700 | 600/500 | 600 |
| ATH (1) SURFACE AREA | 11 | 11 | 11 | 11 |
| ATH (1) AMOUNT (phr) | 128 | 128 | 136 | 128 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | S | S | S | S |
| SILANE AMOUNT (phr) | 1.74 | 1.74 | 1.74 | 1.74 |
| NET SILANE ON FILLER (pph) | 0.796 | 0.796 | 0.747 | 0.796 |
| RETILOX F40 | 1.86 | 1.86 | 1.86 | 1.86 |
| TRIGONOX X29/40 | 1.86 | 1.86 | 1.86 | 1.86 |
| TAC | 0.15 | 0.15 | 0.15 | 0.15 |
| HOT ELONGATION (%) | | | 37.5 | |
| TENSILE STRENGTH (MPa) | 8.43 | 8.6 | 8.4 | 8.19 |
| ELONGATION AT BREAK (%) | 305 | 301 | 329 | 248 |
| TEAR STRENGTH (kN/m) | 4.66 | 4.48 | 6.22 | 5.51 |
| LINEAR SWELL (%) | | | 8 | |
| MOONEY VISCOSITY | | 27 | 25 | 26 |

TABLE Part 16

| EXAMPLE | 42 | 43 | AD | AE |
|---|---|---|---|---|
| LEVAPREN TYPE (100 phr) | 600/500 | 600 | 400 | 400 |
| ATH (1) SURFACE AREA | 11 | 11 | 7 | 7 |
| ATH (1) AMOUNT (phr) | 136 | 144 | 130 | 130 |
| ATH (2) SURFACE AREA | | | | |
| ATH (2) AMOUNT (phr) | | | | |
| CYPRUBOND AMOUNT (phr) | 17 | 18 | | |
| SILANE TYPE | S | S | | |
| SILANE AMOUNT (phr) | 1.74 | 1.74 | | |
| NET SILANE ON FILLER (pph) | 0.796 | 0.752 | | |
| RETILOX F40 | 1.86 | 1.86 | 1.62 | 1.62 |
| TRIGONOX X29/40 | 1.86 | 1.86 | 3.24 | 3.24 |
| TAC | 0.15 | 0.15 | 0.51 | 0.51 |
| HOT ELONGATION (%) | 40 | | | |
| TENSILE STRENGTH (MPa) | 8.07 | 8.32 | 8.65 | 9.2 |
| ELONGATION AT BREAK (%) | 291 | 362 | 566 | 566 |
| TEAR STRENGTH (kN/m) | 6.22 | 6.01 | 9.4 | 9.9 |
| LINEAR SWELL (%) | 9.3 | | 25.3 | 24 |
| MOONEY VISCOSITY | 25 | 29 | 33 | 34 |

TABLE Part 17

| EXAMPLE | 45 | AF | 46 | 47 | 48 |
|---|---|---|---|---|---|
| LEVAPREN TYPE (100 phr) | 500 | 600 | 600 | 700 | 700 |
| ATH (1) SURFACE AREA | 7 | 7 | 7 | 7 | 7 |
| ATH (1) AMOUNT (phr) | 130 | 130 | 130 | 130 | 130 |
| ATH (2) SURFACE AREA | | | | | |
| ATH (2) AMOUNT (phr) | | | | | |
| CYPRUBOND AMOUNT (phr) | | | | | |
| SILANE TYPE | | | | | |
| SILANE AMOUNT (phr) | | | | | |
| NET SILANE ON FILLER (pph) | | | | | |
| RETILOX F40 | 1.62 | 1.62 | 1.62 | 1.62 | 1.62 |
| TRIGONOX X29/40 | 3.24 | 3.24 | 3.24 | 3.24 | 3.24 |
| TAC | 0.51 | 0.51 | 0.51 | 0.51 | 0.51 |
| HOT ELONGATION (%) | | <26 | | | |
| TENSILE STRENGTH (MPa) | 8.54 | 6.8 | 7.7 | 7.3 | 7.08 |
| ELONGATION AT BREAK (%) | 529 | 461 | 469 | 301 | 356 |
| TEAR STRENGTH (kN/m) | 8.1 | 6.68 | 5.5 | 4.1 | 4.6 |
| LINEAR SWELL (%) | 13.3 | 6.7 | 6.7 | 4 | 4 |
| MOONEY VISCOSITY | 32 | 42 | 40 | 35 | 31 |

TABLE Part 18

| EXAMPLE | AG | 49 | 50 | 51 |
|---|---|---|---|---|
| LEVAPREN TYPE (100 phr) | 400 | 500 | 700 | 600 |
| ATH (1) SURFACE AREA | 7 | 7 | 7 | 11 |
| ATH (1) AMOUNT (phr) | 130 | 130 | 130 | 128 |
| ATH (2) SURFACE AREA | | | | |
| ATH (2) AMOUNT (phr) | | | | |
| CYPRUBOND AMOUNT (phr) | | | | 25 |
| SILANE TYPE | | | | S |
| SILANE AMOUNT (phr) | | | | 1.74 |
| NET SILANE ON FILLER (pph) | | | | 0.796 |
| RETILOX F40 | 1.62 | 1.62 | 1.62 | 2 |
| TRIGONOX X29/40 | 3.24 | 3.24 | 3.24 | 0 |
| TAC | 0.51 | 0.51 | 0.51 | 0 |
| HOT ELONGATION (%) | | | | 87.5 |
| TENSILE STRENGTH (MPa) | 9.29 | 7.78 | 7.2 | 7 |
| ELONGATION AT BREAK (%) | 572 | 490 | 344 | 512 |
| TEAR STRENGTH (kN/m) | 10.56 | 7.8 | 4.7 | 8.5 |
| LINEAR SWELL (%) | 26.7 | 13.3 | 4 | |
| MOONEY VISCOSITY | 35 | 37 | 37 | |

TABLE Part 19

| EXAMPLE | AH | AJ | AK | AL | 52 |
|---|---|---|---|---|---|
| LEVAPREN TYPE (100 phr) | 600 | 600 | 600 | 600 | 600 |
| ATH (1) SURFACE AREA | 11 | 11 | 11 | 11 | 11 |
| ATH (1) AMOUNT (phr) | 128 | 128 | 128 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | S | S | S | S | S |
| SILANE AMOUNT (phr) | 1.74 | 1.74 | 1.74 | 1.74 | 1.74 |
| NET SILANE ON FILLER (pph) | 0.796 | 0.796 | 0.796 | 0.796 | 0.796 |
| RETILOX F40 | 8 | 8 | 0.7 | 0.7 | 5 |
| TRIGONOX X29/40 | 0 | 0 | 1.0 | 1.0 | 0 |
| TAC | 0 | 0 | 0.3 | 0.3 | 0 |
| HOT ELONGATION (%) | 20 | 20 | 202.5 | 185 | 35 |
| TENSILE STRENGTH (MPa) | 5 | 6.43 | 5.78 | 5.38 | 8.42 |
| ELONGATION AT BREAK (%) | 111 | 91 | 546.7 | 509 | 302 |
| TEAR STRENGTH (kN/m) | 3.16 | 2.91 | 9.83 | 9.81 | 4.38 |
| LINEAR SWELL (%) | | | | | |
| MOONEY VISCOSITY | | | | | |

12

TABLE Part 20

| EXAMPLE | 53 | AM | AN | 54 | AP |
|---|---|---|---|---|---|
| LEVAPREN TYPE (100 phr) | 600 | 600 | 600 | 600 | 600 |
| ATH (1) SURFACE AREA | 11 | 11 | 11 | 11 | 11 |
| ATH (1) AMOUNT (phr) | 128 | 128 | 128 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | S | S | S | S | S |
| SILANE AMOUNT (phr) | 1.74 | 1.74 | 1.74 | 1.74 | 1.74 |
| NET SILANE ON FILLER (pph) | 0.796 | 0.796 | 0.796 | 0.796 | 0.796 |
| RETILOX F40 | 5 | 6.8 | 6.8 | 1.7 | 1.5 |
| TRIGONOX X29/40 | 0 | 0 | 0 | 0 | 0.5 |
| TAC | 0 | 1.2 | 1.2 | 0.3 | 0 |
| HOT ELONGATION (%) | 27.5 | 15 | 15 | 100 | 185 |
| TENSILE STRENGTH (MPa) | 7.72 | 9.89 | 9.56 | 7.1 | 6.49 |
| ELONGATION AT BREAK (%) | 224.6 | 145.3 | 164 | 459 | 510 |
| TEAR STRENGTH (kN/m) | 5.28 | 2.73 | 2.85 | 7.09 | 8.93 |
| LINEAR SWELL (%) | | | | | |
| MOONEY VISCOSITY | | | | | |

TABLE Part 21

| EXAMPLE | AQ | AR | AS | 55 |
|---|---|---|---|---|
| LEVAPREN TYPE (100 phr) | 600 | 600 | 600 | 600 |
| ATH (1) SURFACE AREA | 11 | 11 | 11 | 11 |
| ATH (1) AMOUNT (phr) | 128 | 128 | 128 | 128 |
| ATH (2) SURFACE AREA | | | | |
| ATH (2) AMOUNT (phr) | | | | |
| CYPRUBOND AMOUNT (phr) | 25 | 25 | 25 | 25 |
| SILANE TYPE | S | S | S | S |
| SILANE AMOUNT (phr) | 1.74 | 1.74 | 1.74 | 1.74 |
| NET SILANE ON FILLER (pph) | 0.796 | 0.796 | 0.796 | 0.796 |
| RETILOX F40 | 1 | 2.8 | 1.85 | 3 |
| TRIGONOX X29/40 | 1 | 4 | 0 | 1.25 |
| TAC | 0 | 1.2 | 0.15 | 0.75 |
| HOT ELONGATION (%) | 260 | 20 | 122.5 | 30 |
| TENSILE STRENGTH (MPa) | 6.02 | 8.46 | 6.62 | 7.93 |
| ELONGATION AT BREAK (%) | 581 | 239 | 585 | 328 |
| TEAR STRENGTH (kN/m) | 9.74 | 2.84 | 8.45 | 4.44 |
| LINEAR SWELL (%) | | | | |
| MOONEY VISCOSITY | | | | |

TABLE Part 22

| EXAMPLE | AT | 56 | 57 | 58 | 59 |
|---|---|---|---|---|---|
| LEVAPREN TYPE (100 phr) | 600 | 600 | 600 | 600 | 600 |
| ATH (1) SURFACE AREA | 11 | 11 | 11 | 11 | 11 |
| ATH (1) AMOUNT (phr) | 128 | 128 | 128 | 128 | 128 |
| ATH (2) SURFACE AREA | | | | | |
| ATH (2) AMOUNT (phr) | | | | | |
| CYPRUBOND AMOUNT (phr) | 25 | 25 | 25 | 25 | 25 |
| SILANE TYPE | S | S | S | S | S |
| SILANE AMOUNT (phr) | 1.74 | 1.74 | 1.74 | 1.74 | 1.74 |
| NET SILANE ON FILLER (pph) | 0.796 | 0.796 | 0.796 | 0.796 | 0.796 |
| RETILOX F40 | 5.4 | 2.125 | 4 | 3.375 | 4 |
| TRIGONOX X29/40 | 2.0 | 2.5 | 4 | 1.25 | 0 |
| TAC | 0.6 | 0.375 | 0 | 0.375 | 0 |
| HOT ELONGATION (%) | 175 | 40 | 30 | 30 | 40 |
| TENSILE STRENGTH (MPa) | 4.71 | 7.42 | 7.84 | 8.61 | 8.2 |
| ELONGATION AT BREAK (%) | 514 | 397 | 417 | 351 | 291 |
| TEAR STRENGTH (kN/m) | 9.34 | 4.27 | 4.42 | 4.3 | 6 |
| LINEAR SWELL (%) | | | | | |
| MOONEY VISCOSITY | | | | | |

If the copolymer used has a vinyl acetate content less than 50%, swelling in ASTM No.2 oil is excessive; copolymers with a vinyl acetate content greater than 75% are not readily available, but their use is expected to lead to an insufficient tensile strength and/or tear resistance. If the Mooney Viscosity (ML 1+4) is outside the range 20-35, the composition is less suitable for processing on conventional machinery. If the content of ATH is less than 120 parts, fire retardance is inadequate; if it exceeds 175 parts or the total filler exceeds 200 parts elongation and mechanical properties generally are inadequate. If the specific surface area of the ATH is less than 4 m²/g, reinforcement is inadequate: if it exceeds 12m²/g viscosity is too high and/or elongation insufficient. If the amount of silane is less than 0.4 parts per hundred parts of filler tensile strength and/or electrical properties suffer; if it exceeds 2 parts, then the economics are adversely affected. If the hot elongation (measured as described) is less than 26, the tear strength of the product is inadequate; if it exceeds 120, the tensile strength is insufficient.

Representative examples of cables in accordance with the invention are made with the example compositions as follow: Single-core cables, by extruding a radial thickness of 0.4 mm onto a core comprising a 2.5mm² flexible copper conductor with 0.4mm radial of primary insulation. Multicore cables, by stranding seven such single-core cables together, binding with polyester foil tape, and extruding an overall sheath of the example composition with a radial thickness of 1.5 mm.

## Claims

1. A cable comprising at least one electrical or optical core enclosed in a sheath (including any layer forming the surface of the cable) made of a composition having at ambient temperatures a tensile strength of at least 7MPa, elongation at break of at least 150%, a tear strength of at least 4kN/m and a linear swell not greater than 15% after immersion in ASTM No.2 oil for 168 hours at 100°C (all measured on moulded samples of the composition) and at 120°C a Mooney Viscosity (ML1+5) less than 50 and is characterised by the said composition (before curing) comprising (in parts by weight, where applicable):

   a polymer base consisting substantially of an ethylene/vinyl acetate copolymer having a vinyl acetate content in the range 5075% and a Mooney Viscosity (ML1+4) in the range 20 to 35;

   per hundred parts of the polymer base, 120-175 parts of an alumina trihydrate filler with a BET surface area in the range 4 to 12m²/g and optionally up to 50 parts of a reinforcing filler subject to a maximum total filler content of 200 parts;

   per hundred parts of total filler, 0.4 to 2 parts of a silane coupling agent;

   conventional amounts of at least one antioxidant, of at least one stabiliser effective to inhibit hydrolytic degradation, of at least one release agent and optionally of one or more than one pigment, one or more than one plasticiser and/or or more than one dessicant;

and a chemical curative system in an amount chosen on conjunction with time/temperature conditions to achieve a hot elongation in the range from 26 to 120% in a hot-set test following the procedure of BS6469: 1990 at 200°C using a load of 0.8 MPa.

2. A cable as claimed in claim 1 in which the ethylene/vinyl acetate copolymer has a vinyl acetate content in the range 55-65%.

3. A cable as claimed in claim 1 or claim 2 in which the ethylene/vinyl acetate copolymer has a Mooney Viscosity (ML1+4) in the range 25 to 30.

4. A cable as claimed in any one of the preceding claims in which the alumina trihydrate has a BET surface area of about 11m$^2$/g and is a high-purity grade.

5. A cable as claimed in any one of the preceding claims in which the silane coupling agent is 2-glycidoxypropyl trimethoxysilane.

6. A cable as claimed in any one of the preceding claims in which the curative system comprises two different peroxides.

7. A cable as claimed in claim 6 which the said peroxides are bis *tert*butylperoxy *iso*propyl) benzene and 1, 1 di*tert*butylperoxy-3, 3, 5- trimethyl*cyclo*hexane.

8. A cable as claimed in any one of the preceding claims in which the curative system includes also a co-agent.

9. A composition for use in making cables characterised by the following composition (in parts by weight, where applicable):

a polymer base consisting substantially of an ethylene/vinyl acetate copolymer having a vinyl acetate content in the range 50 to 75% and a Mooney Viscosity (ML1+4) in the range 20 to 35;

per hundred parts of the polymer base, 120 - 175 parts of an alumina trihydrate filler with a BET surface area in the range 4 to 12m$^2$/g and optionally up to 50 parts of a reinforcing filler subject to a maximum total filler content of 200 parts;

per hundred parts of total filler, 0.4 to 2 parts of a silane coupling agent;

conventional amounts of at least one antioxidant, of at least one stabiliser effective to inhibit hydrolytic degradation, of at least one release agent and optionally of one or more than one pigment, one or more than one plasticiser and/or one or more than one dessicant;

and a chemical curative system in an amount chosen on conjunction with time/temperature conditions to achieve a hot elongation in the range from 26 to 120% in a hot-set test following the procedure of BS6469:1990 at 200°C using a load of 0.8MPa;

and after so curing having at ambient temperatures a tensile strength of at least 7MPa, elongation at break of at least 150%, a tear strength of at least 4kN/m and a linear swell not greater than 15% after immersion in ASTM No.2 oil for 168 hours at 100°C (all measured on moulded samples of the composition) and at 120°C a Mooney Viscosity (ML1+5) less than 50.

10. A composition as claimed in claim 9 which the ethylene/vinyl acetate copolymer has a vinyl acetate content in the range 55-65%.

11. A composition as claimed in claim 9 or claim 10 in which the ethylene/vinyl acetate copolymer has a Mooney Viscosity (ML1+4) in the range 25 to 30.

12. A composition as claimed in any one of claims 9-11 in which the alumina trihydrate has a BET surface area of about 11m$^2$/g and is a high-purity grade.

13. A composition as claimed in any one of claims 9-13 in which the silane coupling agent is 2-glycidoxypropyl trimethoxysilane.

14. A composition as claimed in any one of claims 9-13 in which the curative system comprises two different peroxides.

**15.** A compositions as claimed in claim 14 in which the said peroxides are bis *tert*butylperoxy *iso*propyl) benzene and 1, 1 *ditert*butylperoxy-3,3,5- trimethyl*cyclo*hexane.

**16.** A composition as claimed in any one of claims 9-15 in which the curative system includes also a co-agent.

**European Patent Office**

## EUROPEAN SEARCH REPORT

Application Number

| DOCUMENTS CONSIDERED TO BE RELEVANT | | | EP 92307403.3 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X;Y | <u>GB - A - 2 035 333</u><br>(RAYCHEM LIMITED)<br>* Abstract; page 1, lines 12,19,44-51; page 1, line 63 - page 2, line 13; page 2, lines 24-30; examples 2,19,20 * | 1-5,8-13,16;<br>6,7,14,15 | H 01 B 3/44<br>G 02 B 6/44<br>C 08 K 5/14<br>C 08 L 31/04 |
| Y | <u>EP - A - 0 101 175</u><br>(HERCULES INCORPORATED)<br>* Abstract * | 6,14 | |
| Y | CHEMICAL ABSTRACTS, vol. 88, no. 14, April 3, 1978, Columbus, Ohio, USA<br>KOJIMOTO, SUSUMU et al.<br>"Ethylene-vinyl acetate copolymer foams having softners"<br>page 49, abstract-no. 90 733k<br>& Japan. Kokai 77,125,575 (October 21, 1977) | 7,15 | **TECHNICAL FIELDS SEARCHED (Int. Cl.5)**<br><br>H 01 B 3/00<br>G 02 B 6/00<br>C 08 K 5/00<br>C 08 L |

| The present search report has been drawn up for all claims | | |
|---|---|---|
| Place of search<br>VIENNA | Date of completion of the search<br>13-10-1992 | Examiner<br>KUTZELNIGG |